# EUROPÄISCHE PATENTSCHRIFT

(11) **EP 4 169 420 B1**
(45) Veröffentlichungstag und Bekanntmachung des Hinweises auf die Patenterteilung: **05.06.2024**
(21) Anmeldenummer: 22214158.2
(22) Anmeldetag: 24.04.2019
(51) Int. Cl.: A47J 27/00, A47J 36/32, A47J 43/07

(54) **VERFAHREN ZUR GENERIERUNG ZUMINDEST EINES REZEPTVORSCHLAGS, KÜCHENGERÄT SOWIE SYSTEM ZUM ZUBEREITEN VON SPEISEN**
METHOD FOR GENERATING AT LEAST ONE RECIPE SUGGESTION, KITCHEN APPLIANCE AND SYSTEM FOR PREPARING FOOD
PROCÉDÉ DE GÉNÉRATION D'AU MOINS UNE PROPOSITION DE RECETTE, APPAREIL DE CUISINE AINSI QUE SYSTÈME DE PRÉPARATION DE REPAS

(43) Veröffentlichungstag der Anmeldung: 26.04.2023
(62) Teilanmeldung aus: 19170838.7
(73) Patentinhaber: Vorwerk & Co. Interholding GmbH, 42270 Wuppertal (DE)
(72) Erfinder: Kraut-Reinkober, Stefan, 51375 Leverkusen (DE); Mosebach, Andrej, 44809 Bochum (DE); Pieper, Mirco, 42287 Wuppertal (DE); Stach, Christiane, 42477 Radevormwald (DE); Yan, Wenjie, 40476 Düsseldorf (DE); Werhahn, Sarah, 8038 Zürich (CH)
(74) Vertreter: Bals & Vogel Patentanwälte PartGmbB

(56) Entgegenhaltungen:
- EP-A1- 3 069 643

## Beschreibung

Die Erfindung betrifft ein Verfahren zur Generierung zumindest eines Rezeptvorschlags, ein Küchengerät zum Zubereiten von Speisen sowie ein System zum Zubereiten von Speisen mit einem Küchengerät.

Aus dem Stand der Technik sind Küchenmaschinen bekannt, die zum Zubereiten von Speisen dienen. Dabei können derartige Küchenmaschinen unterschiedliche Automatisierungsgrade aufweisen, wobei bspw. in Abhängigkeit von Rezeptdaten Lebensmittel zum Zubereiten der Speisen zerkleinert und/oder gegart werden können. Aufgrund dieser engen Verknüpfung vom tatsächlichen Kochvorgang und dem z.B. als Datensatz vorliegenden Rezept ist es grundsätzlich möglich auch die Rezeptauswahl immer weiter in das Küchengerät zu integrieren. Dadurch kann der Kochvorgang für einen Benutzer vereinfacht sein, da der Benutzer bestimmte Daten nicht in das Küchengerät einzugeben braucht und der Kochvorgang zu reproduzierbaren Ergebnissen führen kann. Dabei ein Benutzer im Normalfall nur solche Rezepte ausführen, die seinem Geschmack entsprechen. Um dem Benutzer die Rezeptauswahl zu vereinfachen ist es folglich wünschenswert, die spezifischen Präferenzen eines Benutzers bei der Auswahl der zur Verfügung gestellten Rezepte berücksichtigen zu können.

Aus der DE 10 2013 106 865 A1 ist es bspw. bekannt, einen Benutzer an der Küchenmaschine zu identifizieren und diesem von ihm bevorzugte Rezepte anzuzeigen. Um die Rezeptauswahl für den Benutzer weiter zu vereinfachen ist es ferner wünschenswert die Auswahl solcher bevorzugten Rezepte intelligent und individuell für den Benutzer auszugestalten. Aus der EP 3 069 643 A1 ist ferner ein Verfahren zum Betrieb einer elektromotorisch angetriebenen Küchenmaschine bekannt.

Es ist eine Aufgabe der vorliegenden Erfindung voranstehende aus dem Stand der Technik bekannte Nachteile zumindest teilweise zu beheben. Insbesondere ist es eine Aufgabe der vorliegenden Erfindung für einen Benutzer eines Küchengerätes eine Rezeptauswahl, insbesondere in Hinblick auf seine individuellen Präferenzen, zu vereinfachen.

Die voranstehende Aufgabe wird gelöst durch ein Verfahren mit den Merkmalen des unabhängigen Verfahrensanspruchs, ein Küchengerät mit den Merkmalen des unabhängigen Vorrichtungsanspruchs sowie ein System zum Zubereiten von Speisen mit den Merkmalen des unabhängigen Systemanspruchs. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Verfahren beschrieben worden sind selbstverständlich auch im Zusammenhang mit dem erfindungsgemäßen Küchengerät und/oder dem erfindungsgemäßen System und jeweils umgekehrt, sodass bzgl. der Offenbarung zu den einzelnen Erfindungsaspekten stets wechselseitig Bezug genommen wird bzw. werden kann.

Erfindungsgemäß umfasst das Verfahren die Merkmale gemäss Anspruch 1.

Vorzugsweise findet eine zeitliche Abarbeitung der Verfahrensschritte in der aufgeführten Reihenfolge statt.

Insbesondere handelt es sich bei dem Küchengerät um eine Küchenmaschine, Kochmixer oder intelligenten Ofen, zum zumindest teilweise automatisierten Abarbeiten von Rezepten. Die Lebensmitteldaten können vorzugsweise Zutaten umfassen, wie bspw. das Vorkommen von Tomaten oder eines Anteils an Tomaten, Gewürzen, Wasser oder dergleichen in einem Rezept. Ferner können die Lebensmitteldaten Klassifikationsdaten der Zutaten und/oder von Rezepten umfassen, wie bspw. "salzfrei", "vegan", "biologisch" und/oder dergleichen. Dabei kann das Erfassen der Lebensmitteldaten ein Erkennen der tatsächlich in das Küchengerät hineingegebenen Zutaten und/oder zumindest ein durch den Benutzer aufgerufenes Rezept umfassen. Ferner ist es denkbar, dass eine am Küchengerät zubereitete Speise während des Zubereitens, vor dem Zubereiten und/oder nach dem Zubereiten erkannt wird, um das Erfassen der Lebensmitteldaten durchzuführen. Vorzugsweise kann ferner vorgesehen sein, dass zunächst ein Benutzerprofil aufgerufen wird, um die Lebensmitteldaten der Datenhistorie des Benutzerprofils unmittelbar zuordnen zu können. Weiterhin ist es denkbar, dass das Erfassen von Lebensmitteldaten für eine Speise durchgeführt wird, die unter dem Benutzerprofil an einem weiteren Küchengerät zubereitet wird oder wurde. Somit kann das Verfahren zur Generierung zumindest eines Rezeptvorschlags, insbesondere von Rezeptvorschlägen, insbesondere auch geräteübergreifend durchgeführt werden, wenn der Benutzer bspw. häufig an unterschiedlichen Geräten seine Speisen zubereitet. Die Datenhistorie kann insbesondere eine Liste oder dergleichen umfassen, in welcher die Lebensmitteldaten abgespeichert werden, um daraus das Verhaltensmuster des Benutzerprofils erkennen zu können. Das Erkennen des Verhaltensmusters des Benutzerprofils in Abhängigkeit von der Datenhistorie kann somit insbesondere eine Analyse der Datenhistorie umfassen, bei welcher vorzugsweise die Präferenzen des Benutzers in Bezug auf die Auswahl seiner Speisen, Lebensmittel und/oder Zutaten analysiert wird. Darauf basierend kann schließlich der mindestens eine Rezeptvorschlag in Abhängigkeit von dem Verhaltensmuster bestimmt werden. So ist es bspw. denkbar, dass beim Erkennen des Verhaltensmusters festgestellt wird, dass der Benutzer vegane Lebensmittel bevorzugt, sodass für das Bestimmen des mindestens einen Rezeptvorschlags ein veganes Rezept ausgewählt wird. Das Bereitstellen des mindestens einen Rezeptvorschlags am Küchengerät kann vorzugsweise umfassen, dass der Rezeptvorschlag am Küchengerät für den Benutzer nutzbar gemacht wird, d.h. z.B. zumindest teilweise automatisiert am Küchengerät ausführbar sein kann. Insbesondere kann der Rezeptvorschlag z.B. an einer Benutzerschnittstelle des Küchengerätes für den Benutzer angezeigt werden. Dabei kann für die tatsächliche Ausführung des Rezeptvorschlags am Küchengerät eine weitere Bestätigung durch den Benutzer erforderlich sein. Durch die Bereitstellung, insbesondere das Anzeigen am Küchengerät kann dem Benutzer der Rezeptvorschlag besonders komfortabel präsentiert werden, so dass dieser das Küchengerät zur Durchführung des Rezeptes komfortabel nutzen kann.

Somit ist durch das erfindungsgemäße Verfahren insbesondere eine intelligente und individuelle Auswahl eines Rezeptvorschlages geschaffen. Damit kann durch den Rezeptvorschlag die Rezeptauswahl bzw. die Ernährung des Benutzers zumindest teilweise in seinem Sinne gesteuert werden. Dabei werden insbesondere ferner über das Erkennen des Verhaltensmusters zumindest teilweise anhand der Datenhistorie zur Verfügung stehende Daten genutzt, um den Geschmack des Benutzers zu analysieren und anhand dessen den mindestens einen Rezeptvorschlag zu generieren. Dadurch ist es bspw. denkbar, dass dem Benutzer ein für ihn völlig neuer Rezeptvorschlag präsentiert werden kann, der individuell auf ihn zugeschnitten ist. Insbesondere können durch das Erkennen des Verhaltensmusters Rückschlüsse auf Essgewohnheiten, Krankheiten, Allergien, Kochexpertise und/oder eine Zusammensetzung eines Haushalts des Benutzers gezogen werden. Dadurch kann bspw. auch eine Hemmschwelle eines Benutzers gesenkt werden, neue Rezepte auszuprobieren. Die Steuerung dieser intelligenten Auswahl kann dabei anhand des Benutzerprofils erfolgen. Das Benutzerprofil kann z.B. passwortgeschützt sein, sodass nur ein bestimmter Benutzer oder eine bestimmte Benutzergruppe darauf zugreifen kann. Ebenso ist es denkbar, dass das Benutzerprofil einem bestimmten Küchengerät zugeordnet ist und somit bspw. das Verhaltensmuster eines Haushaltes repräsentieren kann. Somit kann in einer Art und Weise das Erkennen des Verhaltensmusters realisiert werden, wobei im Laufe der Zeit durch die Vergrößerung der Anzahl der Rezepte und/oder Wiederholungen d.h. insbesondere der Datenhistorie, das Verfahren und/oder das System selbstlernend ausgebildet sein kann.

Weiterhin ist es bei einem erfindungsgemäßen Verfahren denkbar, dass das Erkennen des Verhaltensmusters des Benutzerprofils ein Auffinden von Wiederholungen in der Datenhistorie umfasst. Die Wiederholungen können sich auf einzelne Rezepte beziehen, sodass von einem Benutzer besonders bevorzugte Rezepte erkannt werden, wenn dieser die Rezepte z.B. in einem bestimmten Zeitraum mehrfach wiederholt. Weiterhin kann dadurch auch eine quantitative Abschätzung des Verhaltensmusters erfolgen. Wenn bspw. ein Rezept mehr Wiederholungen aufweist, als ein anderes Rezept, kann daraus insbesondere geschlossen werden, dass das Rezept mit mehr Wiederholungen beim Benutzer beliebter ist. Ferner ist es denkbar, dass sich die Wiederholungen z.B. auf Klassifikationsdaten von Zutaten und/oder Lebensmitteln beziehen, sodass z.B. eine wiederholte Nutzung veganer Rezepte dazu führen kann, dass einem Benutzer vermehrt vegane Rezeptvorschläge präsentiert werden.

Im Rahmen der Erfindung ist es ferner denkbar, dass das Erkennen des Verhaltensmusters und/oder das Bestimmen des Rezeptvorschlags einen Vergleich der Datenhistorie mit mindestens einer weiteren, zumindest einem weiteren Benutzerprofil zugeordneten Datenhistorie umfasst. Der Vergleich kann insbesondere eine Big Data Analyse umfassen. Somit kann das Erkennen des Verhaltensmusters und/oder das Bestimmen des Rezeptvorschlages eine Analyse von Datensätzen unterschiedlicher Benutzer umfassen. Dadurch kann anhand der weiteren Benutzerprofile bzw. der den weiteren Benutzerprofilen zugeordneten Datenhistorien bspw. bestimmt werden, welche Rezepte andere Benutzer bevorzugen, die eine ähnliche Datenhistorie aufweisen, wie das Benutzerprofil, dessen Verhaltensmuster erkannt werden soll bzw. für das ein Rezeptvorschlag bestimmt werden soll. Somit kann eine Menge an Daten genutzt werden, um die Vorhersage bzw. Einschätzung des Geschmacks des Benutzers zu verbessern und/oder zu präzisieren. Vorzugsweise findet der Vergleich bzw. die Analyse mit weiteren Benutzerprofil ausschließlich anonym statt, da es nicht darum geht, die Daten eines speziellen Benutzer abzufragen, sondern eines Benutzers mit ähnlichen Ess- und Kochgewohnheiten. Dieser Vergleich kann beispielsweise anhand der gleichen gemeinsamen Lebensmittelverwendung oder der gleichen gemeinsamen Rezepte erfolgen.

Weiterhin ist es bei einem erfindungsgemäßen Verfahren denkbar, dass in Abhängigkeit von dem Verhaltensmuster mehrere Rezeptvorschläge bestimmt werden, insbesondere wobei die mehreren Rezeptvorschläge am Küchengerät zur Auswahl eines der Rezeptvorschläge durch den Benutzer bereitgestellt werden oder wobei einer der Rezeptvorschläge automatisch ausgewählt wird und am Küchengerät bereitgestellt wird. Beim Bestimmen des mindestens einen Rezeptvorschlages in Abhängigkeit von dem Verhaltensmuster kann sich ergeben, dass mehrere Rezeptvorschläge für die Präferenzen des Benutzers infrage kommen. Werden diese zur Auswahl des Rezeptvorschlages durch den Benutzer am Küchengerät bereitgestellt, kann dieser selbst entscheiden, welchen Rezeptvorschlag er in diesem Moment bevorzugt. Eine automatische Auswahl eines Rezeptvorschlags aus den mehreren Rezeptvorschlägen kann bspw. in Abhängigkeit von vorhandenen Zutaten, der Beliebtheit des Rezeptvorschlages bei weiteren Benutzerprofilen und/oder weiteren Kriterien erfolgen.

Vorzugsweise können die Rezeptvorschläge dem Benutzerprofil in einer Vorschlagsliste zugeordnet werden, insbesondere wobei die Vorschlagsliste eine festgelegte Rezeptfolge umfasst. Die Zuordnung der Rezeptvorschläge zu der Vorschlagsliste des Benutzerprofils kann bspw. eine Bestätigung des Benutzers für alle Rezeptvorschläge und/oder für einzelne Rezeptvorschläge erfordern. Die Vorschlagsliste kann somit eine Art Playlist für Rezepte basierend auf dem Geschmack des Benutzers bzw. des Benutzerprofils darstellen. Insbesondere kann die Vorschlagsliste dynamisch angepasst werden, wenn der Benutzer weitere Lebensmitteldaten erfasst, sodass diese der Datenhistorie hinzugefügt werden können. Ferner ist es denkbar, dass beim Abarbeiten der Vorschlagsliste der Benutzer die einzelnen Rezeptvorschläge bewerten kann, um somit das Erkennen des Verhaltensmusters des Benutzerprofils zu verbessern. So ist es ferner denkbar, dass für das Benutzerprofil mehrere Vorschlagslisten generiert werden, die z.B. jeweils einer Jahreszeit zugeordnet werden können, einer Sportart, einem Status des Benutzers, wie z.B. "Urlaub", oder dergleichen. Dadurch kann eine einfache Möglichkeit geschaffen werden, einem Benutzer verschiedene Rezeptvorschläge zu unterbreiten und ihm gleichzeitig auf einfache Art und Weise zu ermöglichen im Vorfeld zum Abarbeiten mehrerer Rezeptvorschläge Zutaten einzukaufen.

Weiterhin ist es bei einem erfindungsgemäßen Verfahren denkbar, dass das Benutzerprofil eine Identifikation eines Küchengerätes und/oder eines Nutzergerätes umfasst und/oder dass dem Benutzerprofil eine Benutzergruppe, insbesondere ein Haushalt, zugeordnet wird. Die Identifikation des Küchengerätes kann bspw. durch Übermittlung einer Seriennummer des Küchengerätes an einen Server durchgeführt werden. Ferner ist es denkbar, dass sich der Benutzer am Küchengerät und/oder am Nutzergerät, z.B. durch Angabe eines Benutzernamens und/oder eines Passwortes, anmeldet, um seine Identität zu bestätigen. Dadurch kann das Küchengerät und/oder das Nutzergerät dem Benutzerprofil zugeordnet werden, sodass künftige Aktivitäten am Küchengerät und/oder mit dem Nutzergerät in die Datenhistorie einfließen können. Unter dem Nutzergerät kann bspw. ein Smartphone, ein Tablet und/oder dergleichen verstanden werden. Weiterhin kann vorgesehen sein, dass dem Benutzerprofil mehrere Benutzergruppen, z.B. in Form von weiteren, abhängigen Benutzerprofilen, zugeordnet werden. So ist es denkbar, dass das Benutzerprofil einen Haushalt umfasst, dem z.B. Eltern und Kindern angehören. Das Benutzerprofil kann dabei als Ganzes verwaltet werden, sodass z.B. das Erkennen des Verhaltensmusters und/oder das Bestimmen des Rezeptvorschlages auf das gesamte Benutzerprofil bezogen wird oder es kann für die Benutzer, z.B. anhand von Klassifikationen, wie "Erwachsene" und "Kinder", in Einzelnutzer unterteilt sein. Dadurch kann das Erkennen des Verhaltensmusters und/oder das Bestimmen des Rezeptvorschlages verbessert sein, indem dem Benutzerprofil neben den Lebensmitteldaten weitere Daten über die Nutzer zur Verfügung gestellt werden. Dies kann z.B. auch im Vergleich der Datenhistorie mit weiteren Benutzerprofilen genutzt werden um den Vergleich für möglichst ähnliche Benutzerprofile durchzuführen.

Vorzugsweise kann bei einem erfindungsgemäßen Verfahren das Erkennen des Verhaltensmusters des Benutzerprofils ein Erkennen einer zeitlichen Einordnung umfassen und der Rezeptvorschlag in Abhängigkeit von der zeitlichen Einordnung bestimmt werden. Vorzugsweise kann dabei die zeitliche Einordnung mit Kalenderdaten eines Benutzers abgeglichen werden. Die zeitliche Einordnung kann somit ein Zeitmuster umfassen bzw. verarbeitet werden, um auf ein Zeitmuster schließen zu können, das insbesondere Teil des Verhaltensmusters ist. So ist es denkbar, dass ein Benutzer an einem bestimmten Wochentag eine bestimmte Speise oder eine bestimmte Art von Speisen bevorzugt. Bspw. ist es denkbar, dass sich aus der Datenhistorie ergibt, dass mittels des Benutzerprofils jeden Freitag Fisch zubereitet wird. Dies kann in der zeitlichen Einordnung und damit im Verhaltensmuster dahingehend berücksichtigt werden, dass freitags vermehrt Fischrezepte vorgeschlagen werden. Weiterhin ist es denkbar, dass die zeitliche Einordnung eine Uhrzeit umfasst, wobei bspw. festgestellt werden kann, wann der Benutzer üblicherweise seine Speisen zu sich nimmt. Bei der Bestimmung des Rezeptvorschlages kann bspw. berücksichtigt werden, dass zur Verbesserung der Gesundheit des Benutzers bei der Zubereitung von Speisen am Abend weniger kalorienreiche Zutaten verwendet werden. Für die Vorhersage können dabei z.B. Termine eines Benutzers, die sich aus Kalenderdaten ergeben, berücksichtigt werden. Die Kalenderdaten können vorteilhafterweise von einem Server und/oder einem Nutzergerät des Benutzers abgerufen werden.

Ferner ist es denkbar, dass bei einem erfindungsgemäßen Verfahren das Benutzerprofil Vitaldaten eines Benutzers umfasst, wobei die Vitaldaten beim Erkennen des Verhaltensmusters und/oder beim Bestimmen des Rezeptvorschlags berücksichtigt werden. Vitaldaten können insbesondere Gesundheitsdaten umfassen, wie z.B. das Alter des Benutzers, Diabetikerinformationen, wie z. B. Blutzucker, einen Kalorienbedarf und/oder dergleichen. Somit kann ein aktueller oder geschätzter Gesundheitszustand des Benutzers berücksichtigt werden, um den Rezeptvorschlag auch diesbezüglich individuell auf den Benutzer zuzuschneiden.

Im Rahmen der Erfindung kann ferner vorgesehen sein, dass das Verfahren folgenden Schritt umfasst:
- Erfassen von eingekauften Zutaten,
wobei die eingekauften Zutaten beim Erkennen des Verhaltensmusters und/oder beim Bestimmen des mindestens einen Rezeptvorschlags berücksichtigt werden. Insbesondere können die eingekauften Zutaten über eine Einkaufsliste erfasst werden, die manuell vom Benutzer eingegeben werden kann oder automatisch erstellt werden kann. Vorzugsweise kann dabei die Datenhistorie berücksichtigt werden. Aus der Datenhistorie kann hervorgehen, welche Zutaten der Benutzer zuvor eingekauft und/oder verbraucht hat. Dadurch kann vermieden werden, dass Rezeptvorschläge einen hohen Bedarf an weiteren einzukaufenden Zutaten aufweisen.

Ferner ist es bei einem erfindungsgemäßen Verfahren vorgesehen, dass das Verfahren folgenden Schritt umfasst:
- Erfassen von Auswärtsaktivitäten,
wobei die Auswärtsaktivitäten beim Erkennen des Verhaltensmusters und/oder beim Bestimmen des mindestens einen Rezeptvorschlags berücksichtigt werden. Auswärtsaktivitäten können z.B. Restaurantsuche, Essen bei Freunden und/oder eine sportliche Aktivität des Benutzers umfassen. Insbesondere kann das Erfassen von Auswärtsaktivitäten über ein Nutzergerät durchgeführt werden. Dazu kann der Standort des Nutzergerätes analysiert werden. Dadurch ist es nicht nur möglich das Verhaltensmuster anhand von Aktivitäten am Küchengerät zu erfassen, sondern auch weitere Präferenzen des Benutzers können erfasst werden. Geht dieser bspw. besonders häufig in einem italienischen Restaurant essen, kann sich dies positiv oder negativ in den Rezepten niederschlagen. Bei einer positiven Berücksichtigung kann daraus geschlossen werden, dass der Benutzer italienische Speisen bevorzugt und diese somit beim Bestimmen des Rezeptvorschlages präferiert werden. Bei der negativen Berücksichtigung kann vorgesehen sein, dass daraus geschlossen wird, dass der Benutzer ohnehin häufig auswärts italienisch isst und folglich bei den selbst zubereiteten Speisen andere Arten von Speisen bevorzugt. Insbesondere können durch das Erfassen von Auswärtsaktivitäten weitere Daten zur Verfügung gestellt werden, die das Erkennen des Verhaltensmusters und damit das Bestimmen des Rezeptvorschlags genauer auf den Benutzer angepasst werden können.

Weiterhin ist es bei einem erfindungsgemäßen Verfahren denkbar, dass das Verfahren folgenden Schritt umfasst:
- Erfassen einer Zutatenplanung,
wobei die Zutatenplanung beim Erkennen des Verhaltensmusters und/oder beim Bestimmen des mindestens einen Rezeptvorschlags berücksichtigt wird. So kann bspw. vorgesehen sein, dass der Benutzer an einem Nutzergerät und/oder am Küchengerät Rezepte auswählt, die er in Zukunft ausführen möchte. Insbesondere kann bspw. auch eine Einkaufsliste des Benutzers analysiert werden und anhand dessen festgestellt werden, welche Zutaten der Benutzer zukünftig vorrätig haben wird, um den Rezeptvorschlag zu generieren. Insbesondere kann die Zutatenplanung anhand geplanter Rezepte, z.B. anhand der Vorschlagsliste erfasst werden. Dies bietet somit weitere Daten für das Erkennen des Verhaltensmusters. Durch die Berücksichtigung der Zutatenplanung kann ferner eine Abstimmung zwischen den Rezeptvorschlägen und den Vorräten des Benutzers verbessert werden, sodass Zutaten, insbesondere möglichst vor Verfallsdatum, aufgebraucht werden können.

Im Rahmen der Erfindung kann ferner vorgesehen sein, dass das Erfassen von Lebensmitteldaten ein Erkennen eines Rezeptes und/oder ein Identifizieren von dem Küchengerät zugeführten Zutaten umfasst. Das Rezept kann bspw. durch einen Benutzer ausgewählt werden, vorzugsweise anhand eines Rezeptvorschlages, und durch eine Steuereinheit des Küchengerätes von einem externen Medium wie einem USB-Stick, oder von einem Server abgerufen werden. Weiterhin ist es denkbar, dass das Rezept in einem Speicher des Küchengerätes vorliegt und intern abgerufen wird. Das Identifizieren von dem Küchengerät zugeführten Zutaten kann vorzugsweise automatisch durchgeführt werden, bspw. durch eine Sensorvorrichtung des Küchengerätes. So ist es denkbar, dass das Identifizieren der zugeführten Zutaten optisch, z.B. durch eine Kamera, erfolgt. Ferner ist es denkbar, dass die Sensorvorrichtung einen Ultraschallsensor, einen Radarsensor, insbesondere einen Kurzstreckenradarsensor, einen Molekularsensor und/oder dergleichen umfasst, um die Zutaten direkt zu erkennen. Weiterhin ist es denkbar, dass das Identifizieren der Zutaten indirekt durch eine Identifikation einer Verpackung der Zutaten erfolgt, indem bspw. ein Barcodescanner eingesetzt wird, um einen Barcode auf der Verpackung der Zutaten auszulesen. Dadurch kann das Erfassen der Lebensmitteldaten automatisch und in besonders einfacher Art und Weise am Küchengerät durchgeführt werden. Somit kann der Komfort beim Durchführen des erfindungsgemäßen Verfahrens für den Benutzer verbessert sein.

Gemäß einem weiteren Aspekt der Erfindung ist ein Küchengerät zum Zubereiten von Speisen beansprucht. Das Küchengerät weist eine Funktionseinheit zum Bearbeiten der Zutaten und eine Benutzerschnittstelle für eine Interaktion mit einem Benutzer auf. Die Benutzerschnittstelle ist weiterhin mit einem integrierten Steuergerät verbunden, durch welches ein erfindungsgemäßes Verfahren durchführbar, ist Die Funktionseinheit kann vorzugsweise ein Rührwerk und/oder ein Heizelement aufweisen. Somit können durch die Funktionseinheit des Küchengerätes die Speisen zumindest teilweise automatisch zubereitet werden, sodass ein Benutzerkomfort verbessert ist. Die Benutzerschnittstelle kann vorzugsweise ein Bedienelement, bspw. in Form eines Bedienknopfes, und/oder ein Display, vorzugsweise in Form eines Touchdisplays, umfassen.

Dadurch kann der Benutzer mit dem Küchengerät interagieren und dadurch Befehle zum Ansteuern des Küchengerätes an das Steuergerät übermitteln. Insbesondere ist das integrierte Steuergerät ein in das Küchengerät integriertes Steuergerät, d.h. ein internes Steuergerät des Küchengerätes. Hinter dem Initiieren des Verfahrens kann verstanden werden, dass das Verfahren zumindest teilweise durch das integrierte Steuergerät ausgeführt wird und/oder angestoßen wird. So kann vorgesehen sein, dass das Verfahren zumindest teilweise auf einem Server durchgeführt wird und lediglich über das Küchengerät bzw. das integrierte Steuergerät des Küchengerätes angesteuert wird. Ferner ist es jedoch denkbar, dass das Verfahren vollständig durch das integrierte Steuergerät durchgeführt wird. Somit bringt ein erfindungsgemäßes Küchengerät die gleichen Vorteile mit sich, wie sie bereits ausführlich mit Bezug auf ein erfindungsgemäßes Verfahren beschrieben worden sind. Insbesondere kann durch das Küchengerät der Komfort eines Benutzers beim Zubereiten von Speisen und insbesondere bei der Auswahl der zuzubereitenden Speisen verbessert sein.

Gemäß einem weiteren Aspekt der Erfindung ist ein System zum Zubereiten von Speisen beansprucht. Das System weist ein Küchengerät, insbesondere ein erfindungsgemäßes Küchengerät, zum Zubereiten von Speisen auf, wobei das Küchengerät eine Funktionseinheit zum Bearbeiten von Zutaten und eine Benutzerschnittstelle für eine Interaktion mit einem Benutzer aufweist. Weiterhin umfasst das System eine Speichereinheit, in welcher eine Datenhistorie eines Benutzerprofils mit Lebensmitteldaten abspeicherbar ist. Ferner weist das System eine Recheneinheit auf, die dazu ausgebildet ist, ein Verhaltensmuster eines Benutzerprofils in Abhängigkeit von der Datenhistorie zu erkennen und mindestens einen Rezeptvorschlag in Abhängigkeit von dem Verhaltensmuster zu bestimmen, sodass der mindestens eine Rezeptvorschlag am Küchengerät bereitstellbar ist. Bei dem System ist/sind ein integriertes Steuergerät des Küchengerätes und/oder die Recheneinheit dazu ausgebildet, ein erfindungsgemässes Verfahren durchzuführen.

Insbesondere kann der mindestens ein Rezeptvorschlag an der Benutzerschnittstelle des Küchengerätes bereitstellbar, vorzugsweise anzeigbar, sein. Vorzugsweise kann das erfindungsgemäße Verfahren zumindest teilweise durch die Recheneinheit durchführbar sein. Somit bringt ein erfindungsgemäßes System die gleichen Vorteile mit sich, wie sie bereits ausführlich mit Bezug auf ein erfindungsgemäßes Verfahren und/oder ein erfindungsgemäßes Küchengerät beschrieben worden sind. Die Recheneinheit kann insbesondere einen Prozessor, vorzugsweise einen Mikroprozessor, umfassen, um das Verhaltensmuster analysieren und den Rezeptvorschlag bestimmen zu können. Dazu kann die Recheneinheit mit einer Speichereinheit verbunden sein oder in Kommunikationsverbindung stehen und damit einen Datenaustausch ermöglichen.

Im Rahmen der Erfindung kann vorgesehen sein, dass das System eine Sensorvorrichtung umfasst, durch welche verwendete Zutaten zum Bestimmen der Lebensmitteldaten ermittelbar sind, insbesondere wobei die Sensorvorrichtung einen der folgenden Sensoren umfasst:
- Kamera,
- Barcodescanner,
- Ultraschallsensor,
- Radarsensor, insbesondere Kurzstreckenradarsensor,
- Molekularsensor.

Durch die Sensorvorrichtung kann eine automatische Identifikation von Zutaten durchgeführt werden. Insbesondere kann es sich bei den verwendeten Zutaten, die durch die Sensorvorrichtung ermittelbar sind, um dem Küchengerät zugeführte Zutaten handeln.

Ferner kann im Rahmen der Erfindung vorgesehen sein, dass die Sensorvorrichtung in das Küchengerät und/oder ein Nutzergerät integriert ist. Die Sensorvorrichtung kann am Küchengerät angeordnet sein, insbesondere Teil des Küchengerätes sein, oder separat zum Küchengerät vorgesehen sein. Dadurch kann das Küchengerät unabhängig von weiteren Geräten betreibbar sein und Lebensmitteldaten selbstständig erfassen. Weiterhin ist es denkbar, dass die Sensorvorrichtung Teil eines Nutzergerätes, z.B. in Form eines Smartphones, ist. So kann insbesondere eine Kamera und/oder ein Barcodescanner des Nutzergerätes als Sensorvorrichtung genutzt werden, um Lebensmitteldaten zu erfassen und über das Nutzergerät an das Küchengerät und/oder einen Server zu senden, sodass die Recheneinheit diese Daten zur Verfügung hat. Dadurch kann auf erweiterte Sensorfunktionen zugegriffen werden, ohne dass weitere Komponenten am Küchengerät notwendig sind.

Vorzugsweise kann bei einem erfindungsgemäßen System vorgesehen sein, dass die Recheneinheit und/oder die Speichereinheit zur Erhebung von Lebensmitteldaten mit einem weiteren Küchengerät in Kommunikationsverbindung bringbar ist. So ist es denkbar, dass im Rahmen des Benutzerprofils mehrere Küchengeräte durch einen Benutzer oder eine Benutzergruppe verwendet werden, die jedoch alle zum Sammeln von Daten eingesetzt werden sollen, um das Verhaltensmuster des Benutzerprofils zu bestimmen. Dadurch kann es möglich sein, dass das Benutzerprofil nicht an ein einzelnes Küchengerät gebunden ist und der Benutzer räumlich flexibel auf seine Daten zugreifen kann bzw. räumlich flexibel Daten generieren kann, die schließlich das Bestimmen des Rezeptvorschlages im Hinblick auf eine Individualisierung für den Benutzer verbessern.

Weiterhin ist es bei einem erfindungsgemäßen System denkbar, dass ein Server die Recheneinheit und/oder die Speichereinheit umfasst. Somit kann der Rezeptvorschlag gezielt an das Küchengerät übertragen werden. Alternativ ist es denkbar, dass das Küchengerät die Recheneinheit und/oder die Speichereinheit umfasst. Erfasst der Server die Recheneinheit und/oder die Speichereinheit, kann das integrierte Steuergerät des Küchengerätes klein dimensioniert sein und dadurch bspw. weniger Bauraum und/oder geringere Kosten erfordern. Gleichzeitig bietet ein Server die Möglichkeit die Daten zentral zu verwalten, sodass bspw. ein Vergleich mit Daten weiterer Benutzerprofile vereinfacht sein kann. Sind die Recheneinheit und/oder die Speichereinheit in einem Küchengerät vorgesehen, hat dies den Vorteil, dass eine Internetverbindung entfallen kann und somit der volle Funktionsumfang des Küchengerätes unabhängig von einer solchen Internetverbindung genutzt werden kann.

Weiterhin ist es bei einem erfindungsgemäßen System denkbar, dass das Küchengerät eine Geräteschnittstelle aufweist, durch welche das Küchengerät mit der Recheneinheit und/oder der Speichereinheit in Kommunikationsverbindung bringbar ist. Insbesondere kann es sich bei der Geräteschnittstelle z.B. um eine Netzwerkschnittstelle, vorzugsweise eine Internetschnittstelle, handeln, um das Küchengerät mit dem Netzwerk, insbesondere dem Internet, zu verbinden. So ist es denkbar, dass die Geräteschnittstelle eine WLAN-Schnittstelle, Internetschnittstelle, oder dergleichen umfasst. Weiterhin ist es denkbar, dass die Recheneinheit und/oder die Speichereinheit über eine direkte Verbindung mit der Geräteschnittstelle in Kommunikationsverbindung bringbar sein können. So ist es denkbar, dass die Geräteschnittstelle eine Bluetooth-Schnittstelle, USB-Schnittstelle und/oder dergleichen umfasst. Insbesondere ist es denkbar, dass die Recheneinheit und/oder die Speichereinheit auf einem Nutzergerät des Benutzers vorgesehen sind, sodass auch solche Rechenkapazitäten oder Speicherkapazitäten nutzbar sein können.

Weiterhin kann bei einem erfindungsgemäßen System vorgesehen sein, dass die Recheneinheit dazu ausgebildet ist, einem Nutzergerät den mindestens einen Rezeptvorschlag über eine Kommunikationsverbindung zur Verfügung zu stellen. Somit kann der Rezeptvorschlag dem Nutzer insbesondere dezentral zur Verfügung gestellt werden, wobei dies vorzugsweise zusätzlich zur Bereitstellung des Rezeptvorschlages am Küchengerät durchführbar sein kann. Dadurch kann der Benutzer den Rezeptvorschlag z.B. zum Einkaufen oder in ein Restaurant mitnehmen, um zur Nutzung des Rezeptvorschlages nicht auf das Küchengerät angewiesen zu sein. Weiterhin ist es denkbar, dass der Nutzer über das Nutzergerät den Rezeptvorschlag mit Freunden, Verwandten, Arbeitskollegen oder dergleichen teilen kann, sodass vorzugsweise weitere Benutzergruppen profitieren können und einen neuen Rezeptvorschlag kennenlernen können.

Weitere, die Erfindung verbessernde Maßnahmen ergeben sich aus der nachfolgenden Beschreibung zu einigen Ausführungsbespielen der Erfindung, welche in den Figuren schematisch dargestellt sind. Dabei ist zu beachten, dass die Figuren nur beschreibenden Charakter haben, und nicht dazu gedacht sind, die Erfindung in irgendeiner Form einzuschränken. Es zeigen schematisch:
- Figur 1: ein erfindungsgemäßes System zum Zubereiten von Speisen mit einem erfindungsgemäßen Küchengerät in einem ersten Ausführungsbeispiel,
- Figur 2: ein Verfahren zur Generierung zumindest eines Rezeptvorschlags bei der Nutzung des Küchengerätes des ersten Ausführungsbeispiels,
- Figur 3: ein Verhaltensmuster eines Benutzerprofils beim Verfahren des ersten Ausführungsbeispiels,
- Figur 4: einen Vergleich einer Datenhistorie des Benutzerprofils mit weiteren Datenhistorien beim Verfahren des ersten Ausführungsbeispiels,
- Figur 5: ein Verhaltensmuster eines Benutzerprofils bei einem erfindungsgemäßen Verfahren in einem weiteren Ausführungsbeispiel und
- Figur 6: ein erfindungsgemäßes System mit einem erfindungsgemäßen Küchengerät mit einem weiteren Ausführungsbeispiels.

In den nachfolgenden Figuren werden für die gleichen technischen Merkmale auch von unterschiedlichen Ausführungsbeispielen die identischen Bezugszeichen verwendet.

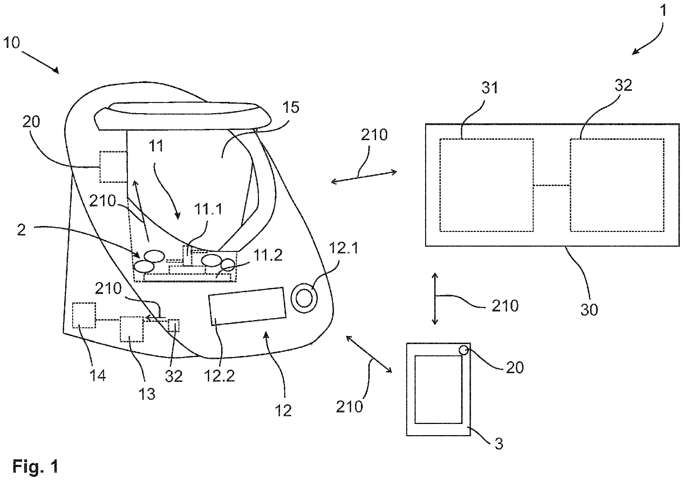

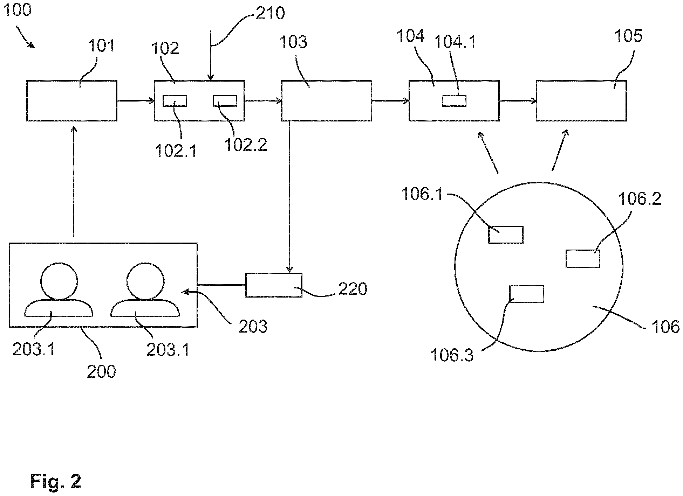

Figur 1 zeigt ein erfindungsgemäßes System 1 zum Zubereiten von Speisen mit einem Küchengerät 10, durch welches die Speisen vorzugsweise zumindest teilweise automatisiert, zubereitet werden können. Dazu weist das Küchengerät 10 eine Funktionseinheit 11 zum Bearbeiten von Zutaten 2 auf. Die Funktionseinheit 11 umfasst vorzugsweise ein Rührwerk 11.1 und ein Heizelement 11.2. Somit kann durch das Küchengerät 10 ein hoher Komfort beim Zubereiten der Speisen für einen Benutzer gegeben sein, wenn dieser die Zutaten 2 bspw. lediglich in ein Kochgefäß 15 des Küchengerätes 10 hineingibt und die Zutaten 2 im Kochgefäß 15 durch die Funktionseinheit 11 automatisch zerkleinert und/oder auf die richtige Temperatur erhitzt werden können. Das Küchengerät 10 weist ferner eine Benutzerschnittstelle 12 für eine Interaktion mit dem Benutzer auf. Vorzugsweise umfasst die Benutzerschnittstelle 12 dabei einen Bedienknopf 12.1. und/oder ein Display 12.2, das vorzugsweise als Touchdisplay ausgestaltet ist. Dadurch ist es dem Benutzer ermöglicht, Benutzerbefehle an ein integriertes Steuergerät 13 des Küchengerätes 10 zu übermitteln. Vorzugsweise kann durch das integrierte Steuergerät 13 ein erfindungsgemäßes Verfahren 100, wie in Figur 2 dargestellt, initiiert und/oder durchgeführt werden. Das Küchengerät 10 weist eine Geräteschnittstelle 14 auf, durch welche das Küchengerät 10 mit einem Nutzergerät 3 und/oder einem Server 30 in Kommunikationsverbindung bringbar ist. Dazu kann das Küchengerät 10 kabellos oder kabelgebunden mit dem Server 30 und/oder dem Nutzergerät 3 verbunden werden oder sein. Insbesondere kann das Küchengerät 10 über das Internet mit dem Nutzergerät 3 und/oder dem Server 30 kommunizieren. So kann vorzugsweise das Verfahren 100 durch das integrierte Steuergerät 13 initiiert werden, indem über die Geräteschnittstelle 14 Lebensmitteldaten 210 an den Server 30 gesendet werden, sodass die Lebensmitteldaten 210 auf dem Server 30 durch eine Recheneinheit 31 des Servers 30 verarbeitet werden können.

Verfahrensschritte des Verfahrens 100 sind ferner in Figur 2 schematisch dargestellt. Dabei erfolgt vorzugsweise zunächst ein Erfassen 101 eines Benutzerprofils 200 des Benutzers. Dies kann bspw. dadurch durchgeführt werden, dass der Benutzer das Benutzerprofil 200 über die Benutzerschnittstelle 12 am Küchengerät 10 aufruft. Um das Benutzerprofil 200 vor unbefugtem Zugriff zu schützen, kann vorgesehen sein, dass Login-Daten, insbesondere ein Benutzername und/oder ein Passwort, für den Zugriff auf das Benutzerprofil 200 erforderlich sein können. Weiterhin umfasst das Verfahren 100 ein Erfassen 102 von Lebensmitteldaten 210. Die Lebensmitteldaten 210 können am Küchengerät 10 erfasst werden, indem die Lebensmitteldaten 210 z.B. aus einem Speicher 32 vom Server 30 oder vom Nutzergerät 3 abgerufen werden. So können bspw. Lebensmitteldaten 210 erfasst werden, wenn der Benutzer über die Benutzerschnittstelle 12 des Küchengerätes 10 ein Rezept 221 aufruft, welches entsprechend Lebensmitteldaten 210 enthält. Weiterhin ist es denkbar, dass das Küchengerät 10 und/oder das Nutzergerät 3 eine Sensorvorrichtung 20 aufweist, durch welche Zutaten 2 zum Bestimmen der Lebensmitteldaten 210 ermittelbar sind. So können die Zutaten 2 bspw. bei der Hinzugabe ins Kochgefäß 15 des Küchengerätes 10 erfasst werden. Dazu kann die Sensorvorrichtung 20 z.B. eine Kamera, einen Ultraschallsensor, einen Radarsensor und/oder einen Molekularsensor erfassen. Um die Zutaten 2 zuordnen zu können, können die erfassten Daten mit Referenzdaten aus dem Speicher 32 abgeglichen werden. Weiterhin ist es denkbar, dass die Sensorvorrichtung 20 Teil des Nutzergerätes 3 ist und z.B. eine Kamera und/oder einen Barcodescanner aufweist. So kann der Benutzer bspw. über das Nutzergerät 3 einen Barcode einer Verpackung von hinzuzugebenen Zutaten 2 scannen sodass die entsprechenden Lebensmitteldaten 210, die der Verpackung zugeordnet sind, an das Küchengerät 10 und/oder den Server 30 übermittelt werden können. Insbesondere kann das Erfassen 102 von den Lebensmitteldaten 210 somit durch ein Erkennen 102.1 eines Rezeptes 221 und/oder durch ein Identifizieren 102.2 von Zutaten 2 durchgeführt werden. Daraufhin erfolgt ein Zuordnen 103 der Lebensmitteldaten 210 zu einer Datenhistorie 220 des Benutzerprofils 200. Die Datenhistorie 220 kann auf dem Server 30, dem integrierten Steuergerät 13 des Küchengerätes 10 und/oder dem Nutzergerät 3 hinterlegt sein. Insbesondere kann die Datenhistorie 220 eine Abfolge von Rezepten 221 umfassen, die über das Benutzerprofil 200 ausgewählt oder durchgeführt wurden.

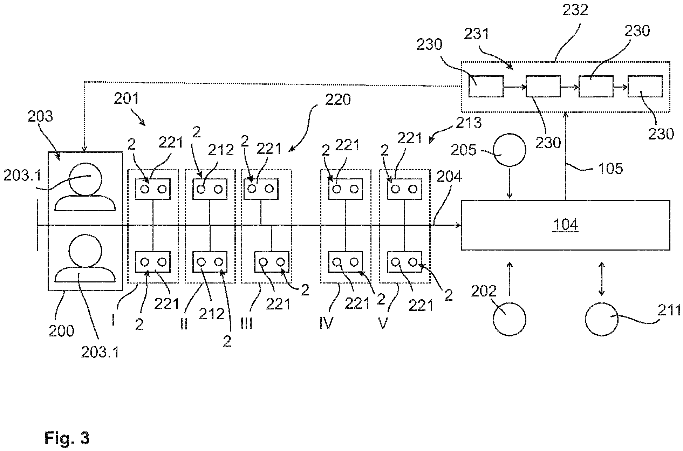

Dies ist bspw. in Figur 3 dargestellt. So kann das Benutzerprofil 200 eine Benutzergruppe 203 umfassen, die z.B. einen Haushalt bildet. Zu der Benutzergruppe 203 können insbesondere zwei oder mehr Einzelnutzer 203.1 zugeordnet sein, für die separat oder gemeinsam die Datenhistorie 220 dem Benutzerprofil 200 zugeordnet wird. In Abhängigkeit von der Datenhistorie 220 erfolgt ein Erkennen 104 eines Verhaltensmusters 201 des Benutzerprofils 200. Das Verhaltensmuster 201 kann jedem Einzelnutzer 203.1 separat zugeordnet werden oder der Benutzergruppe 203 insgesamt. Beim Erkennen 104 des Verhaltensmusters 201 des Benutzerprofils 200 erfolgt vorzugsweise ein Erkennen 104.1 einer zeitlichen Einordnung 204. So kann im Rahmen der Datenhistorie 220 bspw. jedem vom Benutzer ausgewählten Rezept 221 ein Zeitstempel zugeordnet werden, zu welcher Zeit das Rezept 221 durchgeführt oder aufgerufen wurde. Dabei können ferner weitere Datenerfassungen 106 durchgeführt werden, um das Verhaltensmuster 201 genauer vorhersagen zu können. Insbesondere kann ein Erfassen 106.1 von eingekauften Zutaten 2 erfolgen, die beim Erkennen 104 des Verhaltensmusters 201 berücksichtigt werden. Weiterhin können insbesondere im Rahmen der zeitlichen Einordnung 204 auch gemäß 106.2 Auswärtsaktivitäten 212 erfasst werden. So ist es denkbar, dass z.B. Restaurantbesuche ebenfalls erfasst werden, um das Verhaltensmuster 201 zu erkennen. Auch eine insbesondere zukünftige Zutatenplanung 213 kann gemäß 106.3 erfasst werden und beim Erkennen 104 des Verhaltensmusters 201 berücksichtigt werden.

So ist es, wie in Figur 3 dargestellt, denkbar, dass der Benutzer an einem ersten Kalendertag I ein Rezept 221 auf dem Küchengerät 10 aufruft und nachkocht. Am zweiten Kalendertag II wird erfasst, dass die Benutzergruppe 203 auswärts isst und folglich eine Auswärtsaktivität 212 vorliegt, wobei vorzugsweise die bei der Auswärtsaktivität 212 genutzten Zutaten 2 ebenfalls Eingang in die Datenhistorie 220 finden. Am dritten Kalendertag III wird festgestellt, dass zwar die Benutzergruppe 203 ein Rezept 221 des Küchengerätes 10 nutzt, jedoch zu unterschiedlichen Uhrzeiten. Darüber hinaus haben die Einzelnutzer 203.1 der Benutzergruppe 203 für das Benutzerprofil 200 eine Zutatenplanung 213 für die Kalendertage IV und V erstellt, deren Rezepte 221 in den Folgetagen zubereitet werden sollen. Die Zutatenplanung 213 kann z.B. einer Einkaufsliste entnommen werden oder anhand der Zutatenplanung 213 kann eine Einkaufsliste erstellt werden. Insbesondere kann anhand der Zutatenplanung 213 nachvollzogen werden, welche Zutaten 2 die Benutzergruppe 203 einkauft und von welchen Zutaten 2 voraussichtlich unverarbeitete Reste vorhanden sein werden. Weiterhin können in das Erkennen 104 des Verhaltensmusters 201 vorzugsweise Vitaldaten 205 der Benutzergruppe 203 einfließen. Die Vitaldaten 205 können bspw. das Alter der Einzelnutzer 203.1 umfassen. Ferner kann eine Identifikation 202 des Küchengerätes 10 und/oder des Nutzergerätes 3 vorgesehen sein, um bspw. einen Standort des Küchengerätes 10 zu ermitteln. Somit kann die Identifikation 202 des Küchengerätes 10 ebenfalls zum Erkennen 104 des Verhaltensmusters 201 genutzt werden. Zusätzlich oder alternativ kann vorgesehen sein, dass die Identifikation 202 des Küchengerätes 10 zum Aufruf 101 des Benutzerprofils 200 und somit zur Verifikation genutzt wird. Vorzugsweise kann die zeitliche Einordnung 204 ferner mit Kalenderdaten 211 zumindest eines der Benutzer abgeglichen werden. So kann bspw. festgestellt werden, ob das Zubereiten bestimmter Speisen mit bestimmten Terminen der Benutzer zusammenhängt. Bspw. kann ermittelt werden, ob ein Benutzer nach sportlichen Aktivitäten eiweißhaltige Nahrung bevorzugt. In Abhängigkeit von dem Verhaltensmuster erfolgt ferner ein Bestimmen 105 mindestens eines Rezeptvorschlages 230. Diverse Daten, wie z.B. die Vitaldaten 205, die Kalenderdaten 211, insbesondere für zukünftige Termine, die Zutatenplanung und/oder dergleichen können beim Bestimmen 105 des Rezeptvorschlages 230 berücksichtigt werden. Vorzugsweise werden in Abhängigkeit von dem Verhaltensmuster 201 mehrere Rezeptvorschläge 230 bestimmt. Insbesondere können die mehreren Rezeptvorschläge 230 in einer Vorschlagsliste 232 zusammengefasst werden, die eine festgelegte Rezeptfolge 231 umfasst und dem Benutzerprofil 200 zugeordnet wird. Insbesondere kann die Vorschlagsliste 232 in Abhängigkeit von der sich verändernden Datenhistorie 220 und/oder von sich verändernden Verhaltensmuster 201 dynamisch ausgebildet sein, wobei z.B. einzelne Rezeptvorschläge 230 innerhalb der Rezeptfolge 231 verschoben und/oder ersetzt werden können. Durch die Vorschlagsliste 232 erhält der Benutzer die Möglichkeit zum einen zukünftige Rezepte z.B. für eine Woche besser planen und dafür einkaufen zu können und zum anderen kann dadurch die Hemmschwelle des Benutzers sinken neue Rezepte 221 auszuprobieren.

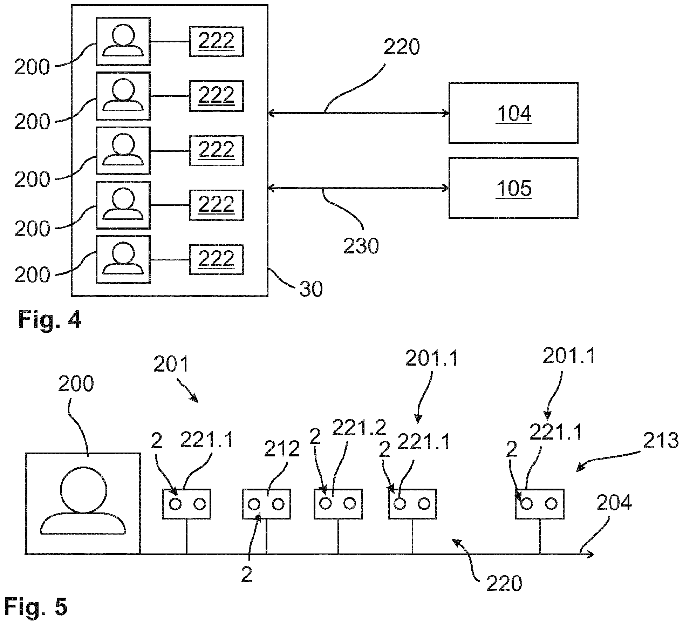

Vorzugsweise kann beim Erkennen 104 des Verhaltensmusters 201 und/oder beim Bestimmen 105 des mindestens einen Rezeptvorschlags 230 gemäß Figur 4 ein Vergleich der Datenhistorie 220 mit mindestens einer weiteren Datenhistorie 222 erfolgen, die einem weiteren Benutzerprofil 200 zugeordnet ist. Die weiteren Benutzerprofile 200 können insbesondere auf dem Server 30 hinterlegt sein, und dadurch Anhaltspunkte bieten, wie sich Benutzer oder Benutzergruppen 203 anderer Benutzerprofile 200 z.B. mit ähnlichen Präferenzen in Bezug auf Zutaten 2 und/oder Auswärtsaktivitäten 212, und/oder mit ähnlichen Vitaldaten 205 verhalten haben. Anhand dessen kann das Verhaltensmuster 201 präziser bestimmt und/oder der Rezeptvorschlag 230 präziser vorhergesagt werden.

Figur 5 zeigt ferner ein Verhaltensmuster 201 bei einem Benutzerprofil 200 in einem weiteren Ausführungsbeispiel. Aus einer Datenhistorie 220 des Benutzerprofils 200 geht dabei hervor, dass der Benutzer unterschiedliche Rezepte 221.1, 221.2 aufgerufen hat und zumindest eines der Rezepte 221.1 bereits mehrfach verwendet hat, was sich in einer Wiederholung 201.1 des Rezeptes 221.1 wiederspiegelt. Darüber hinaus geht aus einer Zutatenplanung 213 des Benutzerprofils 200 hervor, dass der Benutzer eine weitere Wiederholung 201.1 des Rezeptes 221.1 plant. Folglich ist davon auszugehen, dass es sich bei dem wiederholten Rezept 221.1 um ein vom Benutzer bevorzugtes Rezept 221 handelt, sodass dieses beim Bestimmen 105 eines Rezeptvorschlages 230 und/oder beim Erkennen 104 des Verhaltensmusters 201 berücksichtigt wird. Insbesondere kann der Rezeptvorschlag 230 z.B. ein dem wiederholten Rezept 221.1 ähnliches Rezept 221 umfassen.

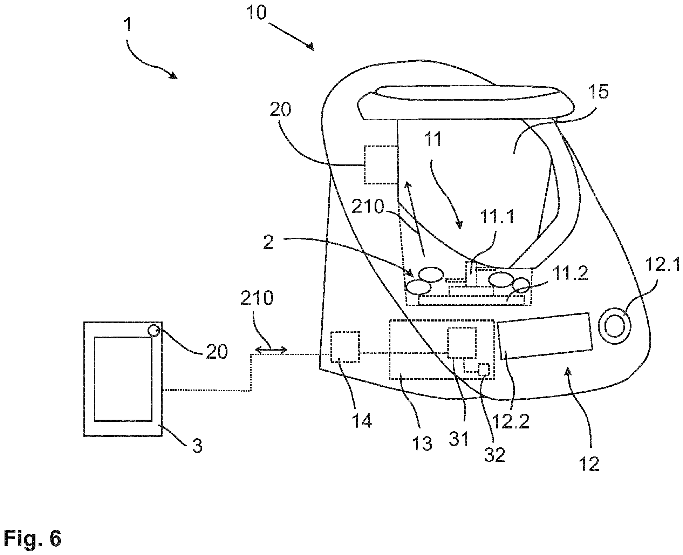

Figur 6 zeigt ein erfindungsgemäßes System 1 zum Zubereiten von Speisen mit einem Küchengerät 10 zum Zubereiten von Speisen in einem weiteren Ausführungsbeispiel. Dabei ist ein Verfahren 100 im Wesentlichen gemäß dem ersten Ausführungsbeispiel durchführbar, wobei jedoch das Küchengerät 10 gemäß Figur 6 eine Speichereinheit 32 und eine Recheneinheit 31 aufweist, die Teil eines integrierten Steuergerätes 13 des Küchengerätes 10 sind. Vorzugsweise ist dadurch das Verfahren 100, wie in Figur 2 bis 4 dargestellt, vollständig auf dem Küchengerät 10 bzw. dem integrierten Steuergerät 13 des Küchengerätes 10 durchführbar. Zusätzlich oder alternativ kann das integrierte Steuergerät 13 des Küchengerätes 10 über eine Geräteschnittstelle 14 des Küchengerätes 10 mit einem Nutzergerät 3 in Kommunikationsverbindung stehen und/oder in Kommunikationsverbindung bringbar sein, um Lebensmitteldaten 210 auszutauschen. Zusätzlich oder alternativ kann, insbesondere nach Wahl des Benutzers, eine Ansteuerung des integrierten Steuergerätes 13 über eine Benutzerschnittstelle 12 durchführbar sein. Weiterhin ist es denkbar, dass Lebensmitteldaten 210 durch eine Sensorvorrichtung 20 des Nutzergerätes 3 und/oder des Küchengerätes 10 erfasst werden können, um auf dem integrierten Steuergerät 13 verarbeitet zu werden. Insbesondere kann das Küchengerät 10 ohne eine Internetverbindung auskommen, wenn das Verfahren 100 vollständig auf dem integrierten Steuergerät 13 ablaufen kann. Ferner kann das Küchengerät 10 unabhängig von der Internetverbindung inbetriebnehmbar sein, sodass ein Benutzer direkt nach dem Kauf des Küchengerätes 10 dessen Funktionen vollständig und insbesondere autark nutzen kann.

Die voranstehende Erläuterung der Ausführungsformen beschreibt die vorliegende Erfindung ausschließlich im Rahmen von Beispielen.

### Bezugszeichenliste

- 1: System
- 2: Zutaten
- 3: Nutzergerät

- 10: Küchengerät
- 11: Funktionseinheit
- 11.1: Rührwerk
- 11.2: Heizelement
- 12: Benutzerschnittstelle
- 12.1: Bedienknopf
- 12.2: Display
- 13: Steuergerät
- 14: Geräteschnittstelle

- 20: Sensorvorrichtung

- 30: Server
- 31: Recheneinheit
- 32: Speichereinheit

- 100: Verfahren
- 101: Erfassen von 200
- 102: Erfassen von 210
- 102.1: Erkennen von 221
- 102.2: Identifizieren von 2
- 103: Zuordnen von 210 zu 220
- 104: Erkennen von 201
- 105: Bestimmen von 230
- 106: weitere Datenerfassungen
- 106.1-3: Erfassen von Daten
- 107: Bereitstellen von 230
- 200: Benutzerprofil
- 201: Verhaltensmuster
- 202: Identifikation von 10
- 203: Benutzergruppe
- 203.1: Einzelnutzer von 203
- 204: Zeitmuster
- 205: Vitaldaten

- 210: Lebensmitteldaten
- 211: Kalenderdaten
- 212: Auswärtsaktivitäten
- 213: Zutatenplanung

- 220: Datenhistorie
- 221: Rezept
- 222: weitere Datenhistorie

- 230: Rezeptvorschlag
- 231: Vorschlagsliste
- 232: Rezeptfolge

- I-V: Kalendertage

## Patentansprüche

1. Verfahren (100) zur Generierung zumindest eines Rezeptvorschlags (230) bei einer Nutzung eines Küchengerätes (10) zum Zubereiten von Speisen, umfassend folgende Schritte:
- Erfassen (102) von Lebensmitteldaten (210), insbesondere am Küchengerät (10),
- Zuordnen (103) der Lebensmitteldaten (210) zu einer Datenhistorie (220) eines Benutzerprofils (200),
- Erkennen (104) eines Verhaltensmusters (201) des Benutzerprofils (200) in Abhängigkeit von der Datenhistorie (220),
- Bestimmen (105) mindestens eines Rezeptvorschlags (230) in Abhängigkeit von dem Verhaltensmuster (201),
- Bereitstellen (107) des mindestens einen Rezeptvorschlags (230) am Küchengerät (10),
wobei das Verfahren (100) folgenden Schritt umfasst:
- Erfassen (106.2) von Auswärtsaktivitäten (212),
wobei die Auswärtsaktivitäten (212) beim Erkennen (104) des Verhaltensmusters (201) und/oder beim Bestimmen (105) des mindestens einen Rezeptvorschlags (230) berücksichtigt werden.

2. Verfahren (100) nach Anspruch 1,
**dadurch gekennzeichnet,**
**dass** das Erkennen (104) des Verhaltensmusters (201) des Benutzerprofils (200) ein Auffinden von Wiederholungen (201.1) in der Datenhistorie (220) umfasst.

3. Verfahren (100) nach Anspruch 1 oder 2,
**dadurch gekennzeichnet,**
**dass** das Erkennen (104) des Verhaltensmusters (201) und/oder das Bestimmen (105) des Rezeptvorschlags (230) einen Vergleich der Datenhistorie (220) mit mindestens einer weiteren, zumindest einem weiteren Benutzerprofil (200) zugeordneten Datenhistorie (222) umfasst.

4. Verfahren (100) nach einem der vorhergehenden Ansprüche,
**dadurch gekennzeichnet,**
**dass** in Abhängigkeit von dem Verhaltensmuster (201) mehrere Rezeptvorschläge (230) bestimmt werden, insbesondere wobei die mehreren Rezeptvorschläge (230) am Küchengerät (10) zur Auswahl eines der Rezeptvorschläge (230) durch den Benutzer bereitgestellt werden oder wobei einer der Rezeptvorschläge (230) automatisch ausgewählt wird und am Küchengerät (10) bereitgestellt wird.

5. Verfahren (100) nach Anspruch 4,
**dadurch gekennzeichnet,**
**dass** die Rezeptvorschläge (230) dem Benutzerprofil (200) in einer Vorschlagsliste (232) zugeordnet werden, insbesondere wobei die Vorschlagsliste (232) eine festgelegte Rezeptfolge (231) umfasst und/oder
**dass** das Benutzerprofil (200) eine Identifikation (202) des Küchengerätes (10) und/oder eines Nutzergerätes (3) umfasst und/oder dass dem Benutzerprofil (200) eine Benutzergruppe (203), insbesondere ein Haushalt, zugeordnet wird.

6. Verfahren (100) nach einem der vorhergehenden Ansprüche,
**dadurch gekennzeichnet,**
**dass** das Erkennen (104) des Verhaltensmusters (201) des Benutzerprofils (200) ein Erkennen (104.1) einer zeitlichen Einordnung (204) umfasst und der Rezeptvorschlag (230) in Abhängigkeit von der zeitlichen Einordnung (104) bestimmt wird, insbesondere wobei die zeitliche Einordnung (204) mit Kalenderdaten (211) zumindest eines Benutzers abgeglichen wird.

7. Verfahren (100) nach einem der vorhergehenden Ansprüche,
**dadurch gekennzeichnet,**
**dass** das Benutzerprofil (200) Vitaldaten (205) eines Benutzers umfasst, wobei die Vitaldaten (205) beim Erkennen (104) des Verhaltensmusters (201) und/oder beim Bestimmen (105) des Rezeptvorschlags (230) berücksichtigt werden.

8. Verfahren (100) nach einem der vorhergehenden Ansprüche,
**dadurch gekennzeichnet,**
**dass** das Verfahren (100) folgenden Schritt umfasst:
- Erfassen (106.1) von eingekauften Zutaten (2),
wobei die eingekauften Zutaten (2) beim Erkennen (104) des Verhaltensmusters (201) und/oder beim Bestimmen (105) des mindestens einen Rezeptvorschlags (230) berücksichtigt werden und/oder
**dass** das Verfahren (100) folgenden Schritt umfasst:
- Erfassen (106.3) einer Zutatenplanung (213),
wobei die Zutatenplanung (213) beim Erkennen (104) des Verhaltensmusters (201) und/oder beim Bestimmen (105) des mindestens einen Rezeptvorschlags (230) berücksichtigt wird.

9. Verfahren (100) nach einem der vorhergehenden Ansprüche,
**dadurch gekennzeichnet,**
**dass** das Erfassen (102) von Lebensmitteldaten (210) ein Erkennen (102.1) eines Rezeptes (221) und/oder ein Identifizieren (102.2) von dem Küchengerät (10) zugeführten Zutaten (2) umfasst.

10. Küchengerät (10) zum Zubereiten von Speisen aufweisend
eine Funktionseinheit (11) zum Bearbeiten der Zutaten (2), und
eine Benutzerschnittstelle (12) für eine Interaktion mit einem Benutzer,
**dadurch gekennzeichnet,**
**dass** die Benutzerschnittstelle (12) mit einem integrierten Steuergerät (13) verbunden ist, welches dazu ausgebildet ist, ein Verfahren (100) nach einem der vorhergehenden Ansprüche durchzuführen.

11. System (1) zum Zubereiten von Speisen aufweisend
ein Küchengerät (10), insbesondere nach Anspruch 10, zum Zubereiten von Speisen mit einer Funktionseinheit (11) zum Bearbeiten von Zutaten (2) und einer Benutzerschnittstelle (12) für eine Interaktion mit einem Benutzer,
eine Speichereinheit (32), in welcher eine Datenhistorie (220) eines Benutzerprofils (200) mit Lebensmitteldaten (210) abspeicherbar ist, und
eine Recheneinheit (31), die dazu ausgebildet ist, ein Verhaltensmuster (201) des Benutzerprofils (200) in Abhängigkeit von der Datenhistorie (220) zu erkennen und mindestens einen Rezeptvorschlag (230) in Abhängigkeit von dem Verhaltensmuster (201) zu bestimmen, so dass der mindestens eine Rezeptvorschlag (230) am Küchengerät (10) bereitstellbar ist,
wobei ein integriertes Steuergerät (13) des Küchengerätes (10) und/oder die Recheneinheit (31) dazu ausgebildet ist/sind, ein Verfahren (100) nach einem der Ansprüche 1 bis 9 durchzuführen.

12. System (1) nach dem vorhergehenden Anspruch,
**dadurch gekennzeichnet,**
**dass** eine Sensorvorrichtung (20) vorgesehen ist, durch welche verwendete Zutaten (2) zum Bestimmen der Lebensmitteldaten (210) ermittelbar sind, insbesondere wobei die Sensorvorrichtung (20) zumindest einen der folgenden Sensoren umfasst:
- Kamera,
- Barcodescanner,
- Ultraschallsensor,
- Radarsensor,
- Molekularsensor,
wobei insbesondere die Sensorvorrichtung (20) in das Küchengerät (10) und/oder in ein Nutzergerät (3) integriert ist

13. System (1) nach einem der Ansprüche 11 oder 12,
**dadurch gekennzeichnet,**
**dass** die Recheneinheit (31) und/oder die Speichereinheit (32) zur Erhebung von Lebensmitteldaten (210) mit einem weiteren Küchengerät (10) in Kommunikationsverbindung bringbar ist und/oder
**dass** ein Server (30) die Recheneinheit (31) und/oder die Speichereinheit (32) umfasst.

14. System (1) nach einem der Ansprüche 11 bis 13,
**dadurch gekennzeichnet,**
**dass** das Küchengerät (10) eine Geräteschnittstelle (14) aufweist, durch welche das Küchengerät (10) mit der Recheneinheit (31) und/oder der Speichereinheit (32) in Kommunikationsverbindung bringbar ist.

15. System (1) nach einem der Ansprüche 11 bis 14,
**dadurch gekennzeichnet,**
**dass** die Recheneinheit (31) dazu ausgebildet ist, einem Nutzergerät (3) den mindestens einen Rezeptvorschlag (230) über eine Kommunikationsverbindung zur Verfügung zu stellen.

## Claims

1. A method (100) for generating at least one recipe suggestion (230) when using a kitchen appliance (10) for preparing food, comprising the following steps:
- recording (102) of food data (210), in particular on the kitchen appliance (10),
- assigning (103) the food data (210) to a data history (220) of a user profile (200),
- recognizing (104) a behavior pattern (201) of the user profile (200) depending on the data history (220),
- determining (105) at least one recipe suggestion (230) as a function of the behavior pattern (201),
- providing (107) the at least one recipe suggestion (230) on the kitchen appliance (10),
wherein the method (100) comprises the following step:
- recording (106.2) of away-from-home activities (212),
wherein the away-from-home activities (212) are taken into account when recognizing (104) the behavior pattern (201) and/or when determining (105) the at least one recipe suggestion (230).

2. Method (100) according to claim 1,
**characterized in that**
recognizing (104) of the behavior pattern (201) of the user profile (200) comprises finding repetitions (201.1) in the data history (220).

3. Method (100) according to claim 1 or 2,
**characterized in that**
recognizing (104) of the behavior pattern (201) and/or determining (105) of the recipe suggestion (230) comprises a comparison of the data history (220) with at least one further data history (222) assigned to at least one further user profile (200).

4. Method (100) according to any one of the preceding claims,
**characterized in that**
a plurality of recipe suggestions (230) are determined as a function of the behavior pattern (201), in particular wherein the plurality of recipe suggestions (230) are provided on the kitchen appliance (10) for selection of one of the recipe suggestions (230) by the user or wherein one of the recipe suggestions (230) is automatically selected and provided on the kitchen appliance (10).

5. Method (100) according to claim 4,
**characterized in that**
the recipe suggestions (230) are assigned to the user profile (200) in a suggestion list (232), in particular wherein the suggestion list (232) comprises a defined recipe sequence (231) and/or
**in that** the user profile (200) comprises an identification (202) of the kitchen appliance (10) and/or a user appliance (3) and/or **in that** a user group (203), in particular a household, is assigned to the user profile (200).

6. Method (100) according to any one of the preceding claims,
**characterized in that**
recognizing (104) of the behavior pattern (201) of the user profile (200) comprises a recognition (104.1) of a temporal classification (204) and the recipe suggestion (230) is determined as a function of the temporal classification (104), in particular wherein the temporal classification (204) is compared with calendar data (211) of at least one user.

7. Method (100) according to any one of the preceding claims,
**characterized in that**
the user profile (200) comprises vital data (205) of a user, the vital data (205) being taken into account when recognizing (104) the behaviour pattern (201) and/or when determining (105) the recipe suggestion (230).

8. Method (100) according to any one of the preceding claims,
**characterized in that**
the method (100) comprises the following step:
- recording (106.1) of purchased ingredients (2),
wherein the purchased ingredients (2) are taken into account when recognizing (104) the behavior pattern (201) and/or when determining (105) the at least one recipe suggestion (230) and/or
the method (100) comprises the following step:
- acquisition (106.3) of an ingredient plan (213),
wherein the ingredient plan (213) is taken into account when recognizing (104) the behavior pattern (201) and/or when determining (105) the at least one recipe suggestion (230).

9. Method (100) according to any one of the preceding claims,
**characterized in that**
recording (102) of food data (210) comprises a recognition (102.1) of a recipe (221) and/or an identification (102.2) of ingredients (2) supplied to the kitchen appliance (10).

10. Kitchen appliance (10) for preparing food, comprising
a functional unit (11) for processing the ingredients (2), and
a user interface (12) for interaction with a user,
**characterized in that**
the user interface (12) is connected to an integrated control unit (13) which is designed to carry out a method (100) according to one of the preceding claims.

11. System (1) for preparing food, comprising
a kitchen appliance (10), in particular according to claim 10, for preparing food with a functional unit (11) for processing ingredients (2) and a user interface (12) for interaction with a user,
a memory unit (32) in which a data history (220) of a user profile (200) with food data (210) can be stored, and
a computing unit (31) which is designed to recognize a behaviour pattern (201) of the user profile (200) as a function of the data history (220) and to determine at least one recipe suggestion (230) as a function of the behaviour pattern (201), so that the at least one recipe suggestion (230) can be provided on the kitchen appliance (10),
wherein an integrated control unit (13) of the kitchen appliance (10) and/or the computing unit (31) is/are designed to perform a method (100) according to one of claims 1 to 9.

12. System (1) according to the preceding claim,
**characterized in that**
a sensor device (20) is provided, by means of which used ingredients (2) for determining the food data (210) can be determined, in particular wherein the sensor device (20) comprises at least one of the following sensors:
- camera,
- barcode scanner,
- Ultrasonic sensor,
- radar sensor,
- molecular sensor,
wherein in particular the sensor device (20) is integrated in the kitchen appliance (10) and/or in a user appliance (3)

13. System (1) according to any one of claims 11 or 12,
**characterized in that**
the computing unit (31) and/or the memory unit (32) for collecting food data (210) can be brought into communication with a further kitchen appliance (10) and/or
**in that** a server (30) comprises the computing unit (31) and/or the memory unit (32).

14. System (1) according to any one of claims 11 to 13,
**characterized in that**
the kitchen appliance (10) has an appliance interface (14) through which the kitchen appliance (10) can be brought into communication with the computing unit (31) and/or the memory unit (32).

15. System (1) according to any one of claims 11 to 14,
**characterized in that**
the computing unit (31) is designed to make the at least one recipe suggestion (230) available to a user appliance (3) via a communication link.

## Revendications

1. Procédé (100) pour générer au moins une proposition de recette (230) lors de l'utilisation d'un appareil de cuisine (10) pour préparer des aliments, comprenant les étapes suivantes :
- l'enregistrement (102) de données alimentaires (210), en particulier sur l'appareil de cuisine (10),
- associer (103) les données alimentaires (210) à un historique de données (220) d'un profil d'utilisateur (200),
- la reconnaissance (104) d'un modèle de comportement (201) du profil d'utilisateur (200) en fonction de l'historique de données (220),
- déterminer (105) au moins une proposition de recette (230) en fonction du modèle de comportement (201),
- la mise à disposition (107) de la au moins une proposition de recette (230) sur l'appareil de cuisine (10),
le procédé (100) comprenant l'étape comprenant:
- saisie (106.2) d'activités à l'extérieur (212),
dans lequel les activités à l'extérieur (212) sont prises en compte lors de la reconnaissance (104) du modèle de comportement (201) et/ou lors de la détermination (105) de la au moins une proposition de recette (230).

2. Procédé (100) selon la revendication 1,
**caractérisé en ce que**
la reconnaissance (104) du modèle de comportement (201) du profil d'utilisateur (200) comprend une recherche de répétitions (201.1) dans l'historique de données (220).

3. Procédé (100) selon la revendication 1 ou 2,
**caractérisé en ce que**
la reconnaissance (104) du modèle de comportement (201) et/ou la détermination (105) de la proposition de recette (230) comprend une comparaison de l'historique de données (220) avec au moins un autre historique de données (222) associé à au moins un autre profil d'utilisateur (200).

4. Procédé (100) selon l'une quelconque des revendications précédentes,
**caractérisé en ce que**
plusieurs propositions de recettes (230) sont déterminées en fonction du modèle de comportement (201), en particulier les plusieurs propositions de recettes (230) étant mises à disposition sur l'appareil de cuisine (10) pour la sélection de l'une des propositions de recettes (230) par l'utilisateur ou l'une des propositions de recettes (230) étant sélectionnée automatiquement et mise à disposition sur l'appareil de cuisine (10).

5. Procédé (100) selon la revendication 4,
**caractérisé en ce que**
les propositions de recettes (230) sont associées au profil d'utilisateur (200) dans une liste de propositions (232), en particulier la liste de propositions (232) comprenant une séquence de recettes (231) fixée et/ou
**en ce que** le profil d'utilisateur (200) comprend une identification (202) de l'appareil de cuisine (10) et/ou d'un appareil d'utilisateur (3) et/ou **en ce qu'**un groupe d'utilisateurs (203), notamment un ménage, est associé au profil d'utilisateur (200).

6. Procédé (100) selon l'une quelconque des revendications précédentes,
**caractérisé en ce que**
la reconnaissance (104) du modèle de comportement (201) du profil d'utilisateur (200) comprend une reconnaissance (104.1) d'une classification temporelle (204) et que la proposition de recette (230) est déterminée en fonction de la classification temporelle (104), en particulier la classification temporelle (204) étant comparée à des données de calendrier (211) d'au moins un utilisateur.

7. Procédé (100) selon l'une quelconque des revendications précédentes,
**caractérisé en ce que**
le profil d'utilisateur (200) comprend des données vitales (205) d'un utilisateur, les données vitales (205) étant prises en compte lors de la reconnaissance (104) du modèle de comportement (201) et/ou lors de la détermination (105) de la proposition de recette (230).

8. Procédé (100) selon l'une quelconque des revendications précédentes,
**caractérisé en ce que**
le procédé (100) comprend l'étape suivante :
- saisie (106.1) d'ingrédients achetés (2),
les ingrédients (2) achetés étant pris en compte lors de la reconnaissance (104) du modèle de comportement (201) et/ou lors de la détermination (105) de la au moins une proposition de recette (230) et/ou
le procédé (100) comprend l'étape suivante :
- saisie (106.3) d'une planification des ingrédients (213),
la planification des ingrédients (213) étant prise en compte lors de la reconnaissance (104) du modèle de comportement (201) et/ou lors de la détermination (105) de la au moins une proposition de recette (230).

9. Procédé (100) selon l'une quelconque des revendications précédentes,
**caractérisé en ce que**
la saisie (102) de données alimentaires (210) comprend une reconnaissance (102.1) d'une recette (221) et/ou une identification (102.2) d'ingrédients (2) amenés à l'appareil de cuisine (10).

10. Appareil de cuisine (10) pour la préparation d'aliments, comprenant
une unité fonctionnelle (11) pour le traitement des ingrédients (2), et
une interface utilisateur (12) pour une interaction avec un utilisateur,
**caractérisé en ce que**
l'interface utilisateur (12) est reliée à un appareil de commande intégré (13) qui est conçu pour mettre en oeuvre un procédé (100) selon l'une des revendications précédentes.

11. Système (1) pour la préparation d'aliments, comprenant
un appareil de cuisine (10), en particulier selon la revendication 10, pour la préparation d'aliments avec une unité fonctionnelle (11) pour le traitement d'ingrédients (2) et une interface utilisateur (12) pour une interaction avec un utilisateur,
une unité de mémoire (32) dans laquelle un historique de données (220) d'un profil d'utilisateur (200) peut être stocké avec des données alimentaires (210), et
une unité de calcul (31) qui est conçue pour reconnaître un modèle de comportement (201) du profil d'utilisateur (200) en fonction de l'historique de données (220) et pour déterminer au moins une proposition de recette (230) en fonction du modèle de comportement (201), de sorte que la au moins une proposition de recette (230) peut être mise à disposition sur l'appareil de cuisine (10),
dans lequel un appareil de commande intégré (13) de l'appareil de cuisine (10) et/ou l'unité de calcul (31) est/sont conçu(s) pour exécuter un procédé (100) selon l'une des revendications 1 à 9.

12. Système (1) selon la revendication précédente,
**caractérisé en ce qu'**
il est prévu un dispositif de détection (20) par lequel des ingrédients utilisés (2) peuvent être déterminés pour déterminer les données alimentaires (210), en particulier le dispositif de détection (20) comprenant au moins l'un des capteurs suivants :
- caméra,
- lecteur de codes-barres,
- capteur à ultrasons,
- capteur radar,
- capteur moléculaire,
le dispositif de détection (20) étant en particulier intégré dans l'appareil de cuisine (10) et/ou dans un appareil d'utilisateur (3)

13. Système (1) selon l'une des revendications 11 ou 12,
**caractérisé en ce que**
l'unité de calcul (31) et/ou l'unité de mémoire (32) peut être mise en liaison de communication avec un autre appareil de cuisine (10) pour la collecte de données alimentaires (210) et/ou
qu'un serveur (30) comprend l'unité de calcul (31) et/ou l'unité de mémoire (32).

14. Système (1) selon l'une quelconque des revendications 11 à 13,
**caractérisé en ce que**
l'appareil de cuisine (10) présente une interface d'appareil (14) par laquelle l'appareil de cuisine (10) peut être mis en liaison de communication avec l'unité de calcul (31) et/ou l'unité de mémoire (32).

15. Système (1) selon l'une quelconque des revendications 11 à 14,
**caractérisé en ce que**
l'unité de calcul (31) est conçue pour mettre à la disposition d'un appareil utilisateur (3) l'au moins une proposition de recette (230) par l'intermédiaire d'une liaison de communication.
